# FASCICULE DE BREVET EUROPEEN

(11) **EP 2 862 802 B1**
(45) Date de publication et mention de la délivrance du brevet: **09.03.2016**
(21) Numéro de dépôt: 14003031.3
(22) Date de dépôt: 03.09.2014
(51) Int. Cl.: B64C 25/56, B64C 27/00

(54) **Système de flottabilité pour aéronef, et aéronef**
Schwimmwerksystem für Luftfahrzeug, und entsprechendes Luftfahrzeug
Buoyancy system for aircraft, and aircraft

(30) Priorité: 16.10.2013 FR 1302395
(43) Date de publication de la demande: 22.04.2015
(73) Titulaire: Airbus Helicopters, 13725 Marignane Cedex (FR)
(72) Inventeur: Delorme, Louis, F-13002 Marseille (FR); Ayache, David, F-13610 LE PUY Sainte Reparade (FR); Certain, Bernard, F-13090 AIX EN Provence (FR); Lamarche, Nicolas, 78250 Meylan-EN-Yvelines (FR)
(74) Mandataire: GPI & Associés

(56) Documents cités:
- US-A- 3 240 449
- US-A- 3 321 158
- US-A- 3 467 343

## Description

La présente invention concerne un système de flottabilité pour aéronef, et un aéronef muni d'un système de flottabilité.

Dès lors, l'invention se situe dans le domaine technique des systèmes de flottabilité permettant l'amerrissage et la stabilité à flot d'un aéronef, et plus particulièrement un aéronef à voilure tournante.

Un tel système de flottabilité participe à la flottaison et la stabilité d'un aéronef suite à un amerrissage. Le système de flottabilité peut être utilisé par exemple suite à un amerrissage forcé, pour permettre l'évacuation des occupants de cet aéronef. Tous les appareils voués aux missions de transport de personnes en zones maritimes sont équipés en principe d'un tel système de flottabilité.

Des règlements de certification précisent d'ailleurs qu'un aéronef doit pouvoir amerrir et être stable sur l'eau avec son système de flottabilité. La stabilité doit être avérée pour des états de surface libre de l'eau et de niveaux de vent qui sont définis dans ces règlements de certification.

Ces états de surface libre de l'eau sont aussi nommés « état de mer », et s'applique à toute surface liquide. Le terme « amerrissage » couvre aussi le posé d'un aéronef sur toute surface libre d'eau, que ce soit sur la mer ou un lac par exemple.

Un système de flottabilité peut comprendre des flotteurs dont le déploiement est commandé soit par le pilote et/ou le copilote par exemple, soit par déclenchement automatique notamment grâce à un ou des détecteur(s) d'immersion. Ces flotteurs peuvent comprendre des outres gonflées par un moyen de déploiement explosif ou électrique par exemple.

Par exemple, le document EP 0193265 B1 dévoile un système de flottabilité muni de sacs de flottaison gonflables qui sont fixés à un train d'atterrissage.

Le document US 2003/0057322 dévoile aussi un système de flottabilité accroché à un train d'atterrissage.

Un système de flottabilité peut aussi comprendre des flotteurs structuraux non gonflables.

On connaît ainsi des systèmes de flottabilité munis de flotteurs fixés à un fuselage d'un aéronef.

Le document JP 61-171699 et le document US 2003/057322 dévoilent un système de flottabilité accroché à un patin d'un hélicoptère.

Le document US3467343 décrit un système de flottabilité muni de flotteurs verticaux gonflés par de l'air comprimé. Les flotteurs sont pourvus de roues manoeuvrées par des vérins hydrauliques.

Le document JP 2010 064697 (NAT UNIV YOKOHAMA) présente un aéronef muni d'un fuselage et de deux flotteurs. Des moyens élastiques permettent d'écarter les flotteurs.

Le document US2271065 (DORNIER JR CLAUDIUS) décrit un aéronef comprenant deux flotteurs rétractables qui s'écartent d'un fuselage avant un amerrissage.

On connait aussi les documents US 3321158 et US3240449.

La présente invention a alors pour objet de proposer un aéronef présentant une stabilité optimisée suite à un amerrissage.

L'invention vise notamment un système de flottabilité comprenant au moins un flotteur gonflable, par exemple deux flotteurs agencés de part et d'autre d'un fuselage de l'aéronef. Un tel fuselage s'étend longitudinalement d'une extrémité avant vers une extrémité arrière, et transversalement d'un flanc droit vers un flanc gauche.

Le système de flottabilité comporte au moins un dispositif de déploiement comprenant un gonfleur et au moins un vérin interposé entre le gonfleur et un flotteur. Le vérin comprend une chemise et une tige solidaire d'un flotteur, la tige étant partiellement insérée dans la chemise et étant coulissante par rapport à cette chemise. De plus, la tige est solidaire d'un piston, le piston délimitant une première chambre au sein de la chemise conjointement avec cette chemise et une deuxième chambre au sein de la tige conjointement avec cette tige, la première chambre étant en communication fluidique avec le gonfleur alors que la deuxième chambre est en communication fluidique avec le flotteur. Dès lors, le piston est muni d'un canal pour mettre en communication fluidique la première chambre et la deuxième chambre, le dispositif de déploiement ayant un obturateur pour obturer le canal dans une position rétractée du vérin afin qu'un gaz alimentant la première chambre cause l'extension du vérin par une translation de la tige et pour ne pas obturer le canal dans une position étendue du vérin suite à ladite translation afin que le gaz gonfle le flotteur fixé à la tige.

Le système de flottabilité peut comprendre un dispositif de déploiement de ce type par flotteur. Eventuellement, un gonfleur peut être commun à tous les dispositifs de déploiement.

Chaque flotteur peut ainsi être fixé à la tige d'au moins un vérin. Cependant, un dispositif de déploiement peut comprendre une pluralité de vérins pour déployer un flotteur.

Dans ce contexte, un flotteur est dégonflé et par exemple rangé dans un compartiment de l'aéronef fermé ou ouvert sur l'extérieur. Chaque vérin est alors dans une position rétractée durant laquelle son obturateur obture le canal du piston de ce vérin.

Lors d'un amerrissage, le compartiment est le cas échéant ouvert.

Durant une première phase de fonctionnement, un gonfleur achemine alors un gaz vers un vérin, et plus particulièrement vers sa première chambre.

Un tel gonfleur peut être un gonfleur usuel, acheminant de l'air par exemple vers au moins un vérin. Tout type de gonfleur peut être utilisé. Le gonfleur peut être commandé par un dispositif de déclenchement usuel automatique ou manuel.

Le canal du piston du vérin étant obturé, la pression régnant dans la première chambre augmente suite à l'apport de gaz provenant du gonfleur, et induit alors la translation de la tige du vérin par rapport à sa chemise. La longueur du vérin augmente ce qui permet d'éloigner le flotteur du fuselage de l'aéronef.

Durant une deuxième phase de fonctionnement, l'obturateur libère le canal du piston. Le gaz produit par le gonfleur s'échappe alors de la première chambre pour gonfler le flotteur en traversant successivement le piston puis la tige du vérin.

Ce système de flottabilité permet donc de gonfler un flotteur, et d'éloigner ce flotteur du fuselage d'un aéronef. En éloignant le flotteur du fuselage, le système de flottabilité optimise la stabilité de l'aéronef sur l'eau.

A iso-stabilité par rapport à un aéronef classique, l'invention peut donc engendrer un gain de masse.

De même, à dimensionnement équivalent des flotteurs par rapport à un aéronef classique, l'invention permet d'offrir une stabilité satisfaisante pour des états de mer plus pénalisants.

A titre illustratif, le niveau de stabilité d'un aéronef peut être multiplié par un coefficient supérieur à un et par exemple égal à deux en éloignant les flotteurs du fuselage d'une distance égale à 300 millimètres.

Le système de flottabilité peut de plus comporter une ou plusieurs des caractéristiques qui suivent.

Ainsi, l'obturateur d'un dispositif de déploiement peut comporter un doigt s'étendant dans la chemise de ce dispositif de déploiement, le doigt pénétrant dans le canal lorsque le vérin est rétracté.

Durant la première phase de fonctionnement, le piston coulisse le long du doigt. Lorsque le piston se sépare du doigt, le canal du piston n'est plus obturé et met en communication fluidique la première et la deuxième chambre du vérin. L'obturateur représente donc un dispositif mécanique relativement simple.

Par exemple, le doigt est solidaire d'un fond de la chemise. Ce fond et le piston du vérin délimite alors longitudinalement la première chambre du vérin. On comprend que le doigt s'étend longitudinalement dans la chemise sur une longueur inférieure à la longueur de cette chemise pour permettre au piston de se détacher de ce doigt.

Par ailleurs, le vérin comporte éventuellement une butée pour limiter l'extension de la tige en dehors de la chemise.

En outre, le dispositif de déploiement peut comporter au moins une sangle fixée au flotteur pour au moins limiter la liberté de mouvement du flotteur par rapport au vérin.

Ce dispositif de déploiement peut comprendre une sangle supérieure reliée à une portion sommitale du flotteur et une sangle inférieure reliée à la base du flotteur pour par exemple éviter une rotation du flotteur par rapport au vérin.

Eventuellement, au moins une sangle s'étend entre la chemise d'un vérin et une enveloppe externe du flotteur.

Selon une autre alternative, une sangle s'étend entre l'enveloppe du flotteur et le fuselage de l'aéronef.

Selon une autre variante, la tige d'un vérin comporte une portion longiligne coulissant dans la chemise suivie d'une portion coudée passant au travers d'un flotteur creux en son centre.

Le flotteur peut alors représenter un ballon qui est creux en son centre pour permettre le passage de la portion coudée de la tige. Cette variante permet notamment de s'affranchir de sangles afin d'éviter un déplacement du flotteur par rapport au fuselage. Par contre, on comprend que la longueur du vérin doit être maximisée pour écarter le flotteur du fuselage.

Par ailleurs, le dispositif de déploiement comporte au moins une bâche fixée à un flotteur pour au moins limiter l'entrée d'eau dans une cabine en vis à vis du flotteur. Suite au déploiement d'un flotteur, la bâche est alors tendue entre l'eau et la cabine.

La bâche peut être tendue entre un flotteur et le fuselage de l'aéronef, en étant fixée à ce fuselage ou à un vérin d'un dispositif de déploiement par exemple.

Le dispositif de déploiement peut comporter un moyen d'extension du vérin pour générer une translation de la tige par rapport à la chemise suite au gonflement d'un flotteur.

Par exemple, le déploiement du flotteur est alors réalisé en trois phases. Durant une première phase de fonctionnement, le vérin est partiellement étendu pour permettre le gonflage du flotteur puis le flotteur est gonflé durant une deuxième phase de fonctionnement. Enfin, durant une troisième phase de fonctionnement, le vérin est totalement étendu.

Ainsi, les deux premières phases de fonctionnement peuvent avoir lieu en vol. La longueur du vérin n'étant pas maximale à l'issue de la deuxième phase de fonctionnement, les efforts exercés sur le système de flottabilité à l'amerrissage sont limités. Une fois l'amerrissage effectué, la troisième phase débute de fait pour optimiser la stabilité de l'aéronef sur l'eau.

Le moyen d'extension peut comprendre le gonfleur, la troisième phase débutant à compter d'une pression seuil régnant dans la première chambre.

Le moyen d'extension peut aussi comprendre un moyen dédié, tel qu'un moteur électrique déplaçant la tige par exemple.

De manière alternative, le déploiement du flotteur peut être réalisé en deux phases, comprenant une phase d'extension totale suivie d'une phase de gonflement du flotteur.

Outre un système de flottabilité, l'invention vise un aéronef muni d'un fuselage et d'un tel système de flottabilité. La chemise d'un vérin d'un dispositif de déploiement est alors fixée au fuselage.

L'invention et ses avantages apparaîtront avec plus de détails dans le cadre de la description qui suit avec des exemples donnés à titre illustratif en référence aux figures annexées qui représentent :
- la figure 1, une coupe d'un aéronef selon l'invention muni d'un flotteur non déployé,
- les figures 2 et 3, des coupes présentant un vérin selon l'invention,
- la figure 4, un schéma explicitant l'extension d'un vérin selon l'invention,
- la figure 5, une coupe d'un aéronef selon l'invention muni d'un flotteur en cours de déploiement,
- la figure 6, une coupe d'un aéronef selon l'invention muni d'un flotteur déployé,
- la figure 7, une coupe d'un aéronef selon l'invention muni d'une tige coudée, et
- la figure 8, une vue d'un aéronef selon l'invention muni d'une bâche solidaire d'un flotteur déployé.

Les éléments présents dans plusieurs figures distinctes sont affectés d'une seule et même référence.

On note que trois directions X, Y et Z orthogonales les unes par rapport aux autres sont représentées sur certaines figures, à savoir une première direction X, une deuxième direction Y et une troisième direction Z.

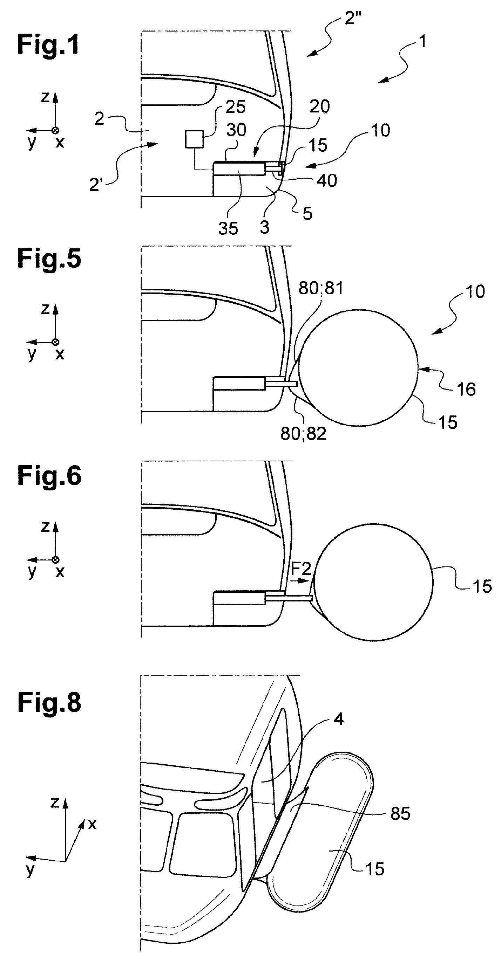

La figure 1 présente un aéronef 1 selon l'invention.

Cet aéronef comprend un fuselage 2 s'étendant en longueur d'une extrémité avant 2' vers une extrémité arrière. De plus, le fuselage 2 s'étend en largeur d'un flanc gauche 2" vers un flanc droit, et en élévation d'une partie basse vers une partie haute.

La partie basse est classiquement munie d'un train d'atterrissage, alors que la partie haute peut porter un rotor de sustentation voire de propulsion. La partie basse peut inclure une barque délimitée notamment par le plancher d'une cabine et l'enveloppe extérieure du fuselage.

Cet aéronef 1 est pourvu d'un système de flottabilité 10 selon l'invention afin de pouvoir se poser sur l'eau.

Un tel système de flottabilité est pourvu d'au moins un flotteur, et par exemple d'au moins deux flotteurs 15 agencés de part et d'autre du fuselage 2 de l'aéronef. Ainsi, un premier flotteur est disposé du côté du flanc gauche de l'aéronef, alors qu'un deuxième flotteur est disposé du côté du flanc droit de l'aéronef.

Les flotteurs peuvent être appariés. Dès lors, les flotteurs d'une paire peuvent être disposés symétriquement de part et d'autre d'un plan antéropostérieur de symétrie de l'aéronef dans une position stable de l'aéronef. Par exemple, l'aéronef comporte une unique paire de flotteurs 15.

Les flotteurs sont des flotteurs gonflables. En dehors des phases d'amerrissage, chaque flotteur peut être plié dans un compartiment 3 de l'aéronef, éventuellement obturé en vol par un capot 5 ou équivalent. Un flotteur comporte alors une outre gonflable délimitée par une enveloppe extérieure.

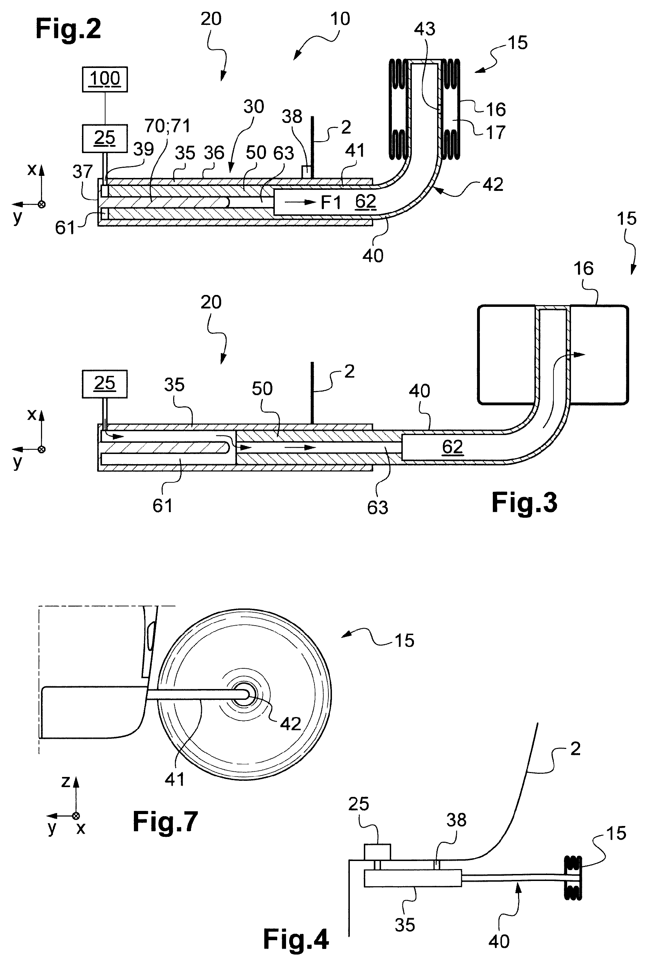

En référence à la figure 2, chaque flotteur est gonflé par un dispositif de déploiement 20 du système de flottabilité.

Un tel dispositif de déploiement 20 est pourvu d'au moins un vérin 30 communiquant avec un gonfleur 25 et un flotteur 15. Le dispositif de déploiement comprend en outre un dispositif de déclenchement 100 automatique ou manuel commandant le gonfleur 25.

Ce vérin 30 est pourvu d'une chemise 35 qui est fixée au fuselage 2. A cet effet, la chemise 35 peut comprendre un moyen de fixation 38 usuel. Cette chemise 35 est ainsi solidarisée au fuselage 2, par exemple au sein d'un compartiment 3.

La chemise 35 est creuse. Ainsi, cette chemise peut être munie d'un tube cylindrique 36 borgne. Ce tube cylindrique 36 s'étend longitudinalement d'une première extrémité obturée par un fond 37 vers une deuxième extrémité non obturée. Le tube cylindrique peut de plus posséder une ouverture 39 reliée au gonfleur 25.

En outre, le vérin 30 possède une tige 40 creuse qui coulisse par rapport à la chemise 35. Cette tige 40 s'étend partiellement à l'intérieur de la chemise 35 et partiellement à l'extérieur de cette chemise 35. Ainsi, cette tige 40 peut être munie d'un tube creux s'étendant d'une première section extrémale présente dans la chemise 35 vers une deuxième section extrémale présente en dehors de cette chemise.

La tige 40 est mobile en translation par rapport à la chemise 35 pour augmenter ou diminuer la longueur du vérin afin respectivement d'éloigner ou de rapprocher un flotteur du fuselage 2. Une butée non représentée peut permettre de limiter l'extension du vérin. Une telle butée peut comprendre un épaulement de la tige coopérant avec un épaulement de la chemise par exemple.

Par ailleurs, la première section extrémale de la tige 40 est alors solidaire d'un piston 50. Ce piston 50 délimite par conséquent longitudinalement une première chambre 61 à l'intérieur de la chemise 35, et une deuxième chambre 62 à l'intérieur de la tige 40.

Par contre, la deuxième section extrémale de la tige 40 est fixée à une enveloppe 16 d'un flotteur 15. En dehors des phases d'amerrissage, l'enveloppe 16 est pliée. On note que la tige comporte au moins un orifice 43 mettant en communication la deuxième chambre 62 avec l'intérieur 17 du flotteur 15.

Par conséquent, la première chambre 61 est en communication fluidique avec un gonfleur par l'ouverture 39 voire une tuyauterie, alors que la deuxième chambre 62 en communication fluidique avec un flotteur par chaque orifice 43 voire au moins une tuyauterie.

De plus, un canal 63 traverse longitudinalement de part en part le piston 50 pour mettre en communication fluidique la première chambre 61 et la deuxième chambre 62. Au moins un joint peut être interposé entre la chemise 35 et la tige 40 pour éviter toute autre communication fluidique entre la première chambre 61 et la deuxième chambre 62.

Le dispositif de déploiement inclut alors un obturateur 70 pour obturer ou libérer le canal 63. Un tel obturateur peut comporter un doigt 71 s'emmanchant à l'intérieur du canal 63

Ainsi, le vérin peut comprendre un doigt 71 s'étendant longitudinalement à l'intérieur de la chemise 35 à partir du fond 37. Lorsque le vérin est rétracté, le doigt 71 est emmanché dans le canal pour empêcher une communication fluidique entre la première chambre 61 et la deuxième chambre 62. A l'inverse, lorsque le vérin est au moins partiellement étendu, le doigt 71 n'est plus emmanché dans le canal 63 pour permettre une communication fluidique entre la première chambre 61 et la deuxième chambre 62.

Durant une première phase de fonctionnement visant à déployer un flotteur 15, le gonfleur achemine un gaz tel que de l'air ou un gaz inerte par exemple vers le vérin. Ce gaz pénètre dans la première chambre 61 par l'ouverture 39. Le canal 63 du piston étant obturé par l'obturateur, la pression du gaz dans la première chambre augmente.

Cette pression exercée par le gaz sur le piston 50 engendre une translation de la tige selon la flèche F1. Cette tige et notamment sa deuxième section extrémale portant le flotteur saille alors du fuselage de l'aéronef en référence à la figure 4.

A l'issue de la première phase de fonctionnement, le doigt 71 n'est plus inséré dans le canal 63 ce qui permet de déclencher la deuxième phase de fonctionnement.

Durant cette deuxième phase de fonctionnement illustrée sur la figure 3, le gaz produit par le gonfleur est acheminé vers le flotteur successivement via la première chambre 61, le canal 63 puis la deuxième chambre 62. Ce gaz permet alors de gonfler le flotteur.

A l'issue de la deuxième phase de fonctionnement, le flotteur est gonflé conformément à la figure 5.

Eventuellement durant une troisième phase de fonctionnement illustrée sur la figure 6, le gonfleur continue d'acheminer du gaz vers le vérin pour étendre totalement le vérin selon la flèche F2.

Le gonfleur représente ainsi un moyen d'extension étendant le vérin 30 en générant une translation de la tige 40 par rapport à la chemise 35 suite au gonflement d'un flotteur 15.

L'extension du vérin se produit alors durant la première phase de fonctionnement et la troisième phase de fonctionnement. Par exemple, la première phase de fonctionnement a lieu avant l'amerrissage, alors que la troisième phase de fonctionnement a lieu après l'amerrissage en tant que tel, pour limiter les efforts exercés par l'eau sur le vérin lorsque l'aéronef se pose sur l'eau.

Par ailleurs, le dispositif de déploiement peut prévoir au moins une sangle 80 visible sur les figures 5 et 6 pour limiter les mouvements d'un flotteur 15 par rapport à un vérin.

Par exemple, ce dispositif de déploiement est équipé d'une sangle supérieure 81 et/ ou d'une sangle inférieure 82 fixées respectivement à une portion supérieure et une portion inférieur du flotteur. Les termes « supérieure » et « inférieure » sont à considérer par rapport à une direction dirigée selon la pesanteur.

Chaque sangle peut alors être reliée à un vérin ou encore au fuselage de l'aéronef.

A titre de variante ou de complément, la première section extrémale peut être une portion longiligne 41 de la tige, alors que la deuxième section extrémale peut être une portion coudée de manière à passer au centre du flotteur.

En référence à la figure 7, la tige passe alors au travers du flotteur, ce qui limite de fait la liberté de mouvement du flotteur.

La figure 8 présente en outre un dispositif de déploiement muni d'une bâche 85. Cette bâche 85 s'étend à partir du flotteur vers au moins un vérin ou le fuselage de l'aéronef. La bâche peut permettre de limiter les projections d'eau vers une cabine de l'aéronef.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, le système de flottabilité peut comprendre au moins un dispositif de déploiement. Par exemple, le système peut comprendre un unique dispositif de déploiement muni d'un gonfleur relié à une pluralité de vérins pour déployer et gonfler l'ensemble des flotteurs. Le système peut aussi comprendre par exemple un dispositif de déploiement par flotteur, chaque dispositif de déploiement ayant au moins un gonfleur relié à au moins un vérin.

Par ailleurs, le gonfleur peut éventuellement aspirer l'air présent dans un flotteur 35 pour rétracter un tel flotteur à l'issue d'un amerrissage.

## Revendications

1. Système de flottabilité (10) d'un aéronef (1), ce système de flottabilité (10) étant muni d'au moins un flotteur (15) gonflable, ledit système de flottabilité (10) comporte au moins un dispositif de déploiement (20) comprenant un gonfleur (25) et au moins un vérin (30) interposé entre ledit gonfleur (25) et le flotteur (15), ledit vérin (30) ayant une chemise (35) et une tige (40) solidaire du flotteur (15), ladite tige (40) étant partiellement insérée dans ladite chemise (35) et étant coulissante par rapport à cette chemise (35), ladite tige (40) étant solidaire d'un piston (50), le piston (50) délimitant une première chambre (61) au sein de ladite chemise (35) conjointement avec cette chemise (35) et une deuxième chambre (62) au sein de ladite tige (40) conjointement avec cette tige (40), **caractérisé en ce que** la première chambre (61) est en communication fluidique avec le gonfleur (25) alors que la deuxième chambre (62) est en communication fluidique avec le flotteur (15), ledit piston (50) ayant un canal (63) pour mettre en communication fluidique la première chambre (61) et la deuxième chambre (62), ledit dispositif de déploiement (20) ayant un obturateur (70) pour obturer ledit canal (63) dans une position rétractée du vérin (30) afin qu'un gaz alimentant la première chambre (61) cause l'extension du vérin (30) par une translation de ladite tige (40) et pour ne pas obturer le canal (63) dans une position étendue du vérin (30) suite à ladite translation afin que ledit gaz gonfle ledit flotteur (15).

2. Système de flottabilité selon la revendication 1,
**caractérisé en ce que** ledit obturateur (70) comporte un doigt (71) s'étendant dans ladite chemise (35), ledit doigt (71) pénétrant dans ledit canal (63) lorsque le vérin (30) est rétracté.

3. Système de flottabilité selon la revendication 2,
**caractérisé en ce que** ledit doigt (71) est solidaire d'un fond (37) de ladite chemise (35).

4. Système de flottabilité selon l'une quelconque des revendications 1 à 3,
**caractérisé en ce que** ledit vérin (30) comporte une butée pour limiter l'extension de ladite tige (40) en dehors de la chemise (35).

5. Système de flottabilité selon l'une quelconque des revendications 1 à 4,
**caractérisé en ce que** ledit dispositif de déploiement (20) comporte au moins une sangle (80) fixée au flotteur (15) pour au moins limiter la liberté de mouvement du flotteur (15) par rapport au vérin (30).

6. Système de flottabilité selon la revendication 5,
**caractérisé en ce qu'**au moins une sangle (80) s'étend entre ladite chemise (35) et une enveloppe externe (16) du flotteur (15).

7. Système de flottabilité selon l'une quelconque des revendications 1 à 6,
**caractérisé en ce que** ledit dispositif de déploiement (20) comporte au moins une bâche (85) fixée à un flotteur (15) pour au moins limiter l'entrée d'eau dans une cabine (4) en vis à vis du flotteur (15).

8. Système de flottabilité selon l'une quelconque des revendications 1 à 7,
**caractérisé en ce que** ladite tige (40) comporte une portion longiligne (41) coulissant dans la chemise (35) suivie d'une portion coudée (42) passant au travers d'un flotteur (15) creux en son centre.

9. Système de flottabilité selon l'une quelconque des revendications 1 à 8,
**caractérisé en ce que** ledit dispositif de déploiement (20) comporte un moyen d'extension pour étendre le vérin (30) afin de générer une translation de la tige (40) par rapport à la chemise (35) suite au gonflement d'un flotteur (15).

10. Aéronef (1) muni d'un fuselage,
**caractérisé en ce que** ledit aéronef (1) comporte un système de flottabilité (10) selon l'une quelconque des revendications 1 à 9, ladite chemise étant fixée au fuselage (2).

## Patentansprüche

1. Schwimmersystem (10) eines Luftfahrzeugs (1), wobei das Schwimmersystem (10) mit mindestens einem aufblasbaren Schwimmer (15) versehen ist, wobei das Schwimmersystem (10) mindestens eine Entfaltungsvorrichtung (20) mit einer Aufblasvorrichtung (25), und mindestens einen Zylinder (30), der zwischen der Aufblasvorrichtung (25) und dem Schwimmer (15) angeordnet ist, aufweist, wobei der Zylinder (30) eine Zylinderlaufbuchse (35) und eine Stange (40), die mit dem Schwimmer (15) fest verbunden ist, aufweist, wobei die Stange (40) teilweise in die Zylinderlaufbuchse (35) eingefügt ist und relativ zu dieser Zylinderlaufbuchse (35) gleitend verschiebbar ist, wobei die Stange (40) mit einem Kolben (50) fest verbunden ist, wobei der Kolben (50) eine erste Kammer (61) in der Zylinderlaufbuchse (35) zusammen mit dieser Zylinderlauf buchse (35) und eine zweite Kammer (62) in der Stange (40) zusammen mit dieser Stange (40) eingrenzt,
**dadurch gekennzeichnet, dass** die erste Kammer (61) mit der Aufblasvorrichtung (25) in Fluidkontakt steht, während die zweite Kammer (62) mit dem Schwimmer (15) in Fluidkontakt steht, wobei der Kolben (50) einen Kanal (63) aufweist, um die erste Kammer (61) und die zweite Kammer (62) in Fluidkontakt zu bringen, wobei die Entfaltungsvorrichtung (20) einen Verschluss (70) aufweist, um den Kanal (63) in einer zurückgezogenen Stellung des Zylinders (30) zu verschließen, damit ein Gas, mit dem die erste Kammer (61) gespeist wird, das Ausfahren des Zylinders (30) durch eine Translationsbewegung der Stange (40) bewirkt, und um den Kanal (63) in einer ausgefahrenen Stellung des Zylinders (30) nach der Verschiebung nicht zu versperren, damit das Gas den Schwimmer (15) aufbläst.

2. Schwimmersystem nach Anspruch 1,
**dadurch gekennzeichnet, dass** der Verschluss (70) einen Finger (71) aufweist, der sich in die Zylinderlaufbuchse (35) erstreckt, wobei der Finger (71) in den Kanal (63) eindringt, wenn der Zylinder (30) zurückgezogen ist.

3. Schwimmersystem nach Anspruch 2,
**dadurch gekennzeichnet, dass** der Finger (71) mit einem Boden (37) der Zylinderlaufbuchse (35) fest verbunden ist.

4. Schwimmersystem nach einem der Ansprüche 1 bis 3,
**dadurch gekennzeichnet, dass** der Zylinder (30) einen Anschlag aufweist, um das Ausfahren der Stange (40) außerhalb der Zylinderlaufbuchse (35) zu begrenzen.

5. Schwimmersystem nach einem der Ansprüche 1 bis 4,
**dadurch gekennzeichnet, dass** die Entfaltungsvorrichtung (20) mindestens einen Gurt (80) aufweist, der am Schwimmer (15) befestigt ist, um mindestens die Bewegungsfreiheit des Schwimmers (15) relativ zum Zylinder (30) zu begrenzen.

6. Schwimmersystem nach Anspruch 5,
**dadurch gekennzeichnet, dass** mindestens ein Gurt (80) sich zwischen der Zylinderlaufbuchse (35) und einer äußeren Hülle (16) des Schwimmers (15) erstreckt.

7. Schwimmersystem nach einem der Ansprüche 1 bis 6,
**dadurch gekennzeichnet, dass** die Entfaltungsvorrichtung (20) mindestens eine Plane (85) aufweist, die am Schwimmer (15) befestigt ist, um mindestens das Eindringen von Wasser in eine Kabine (4) gegenüber dem Schwimmer (15) zu begrenzen.

8. Schwimmersystem nach einem der Ansprüche 1 bis 7,
**dadurch gekennzeichnet, dass** die Stange (40) einen langgliedrigen Abschnitt (41) aufweist, der in der Zylinderlaufbuchse (35) gleitet, gefolgt von einem gebogenen Abschnitt (42), der durch einen in seiner Mitte hohlen Schwimmer (15) durchgeht.

9. Schwimmersystem nach einem der Ansprüche 1 bis 8,
**dadurch gekennzeichnet, dass** die Entfaltungsvorrichtung (20) ein Ausziehmittel aufweist, um den Zylinder (30) auszufahren, um eine Verschiebung der Stange (40) relativ zur Zylinderlaufbuchse (35) in Folge des Aufblasens eines Schwimmers (15) zu bewirken.

10. Luftfahrzeug (1) mit einem Rumpf,
**dadurch gekennzeichnet, dass** das Luftfahrzeug (1) ein Schwimmersystem (10) nach einem der Ansprüche 1 bis 9 aufweist, wobei die Zylinderlaufbuchse an dem Rumpf (2) befestigt ist.

## Claims

1. A buoyancy system (10) for an aircraft (1), this buoyancy system (10) being provided with at least one inflatable float (15),
said buoyancy system (10) comprises at least one deployment device (20) comprising an inflator (25) and at least one actuator (30) interposed between said inflator (25) and the float (15), said actuator (30) having a cylinder (35) and a rod (40) integral with the float (15), said rod (40) being partially inserted into said cylinder (35) and being sliding relative to this cylinder (35), said rod (40) being integral with a piston (50), the piston (50) defining a first chamber (61) within said cylinder (35) jointly with this cylinder (35) and a second chamber (62) within said rod (40) jointly with this rod (40), **characterised in that** the first chamber (61) is in fluid communication with the inflator (25) whereas the second chamber (62) is in fluid communication with the float (15), said piston (50) having a channel (63) for placing the first chamber (61) and the second chamber (62) in fluid communication, said deployment device (20) having a blocking means (70) for blocking said channel (63) in a retracted position of the actuator (30) so that a gas supplying the first chamber (61) causes the actuator (30) to be extended by translation of said rod (40) and for not blocking the channel (63) in an extended position of the actuator (30) following said translation so that said gas inflates said float (15).

2. A buoyancy system according to Claim 1,
**characterised in that** said blocking means (70) comprises a finger (71) extending within said cylinder (35), said finger (71) penetrating into said channel (63) when the actuator (30) is retracted.

3. A buoyancy system according to Claim 2,
**characterised in that** said finger (71) is integral with a bottom (37) of said cylinder (35).

4. A buoyancy system according to any one of Claims 1 to 3,
**characterised in that** said actuator (30) comprises an abutment for limiting the extension of said rod (40) outside the cylinder (35).

5. A buoyancy system according to any one of Claims 1 to 4,
**characterised in that** said deployment device (20) comprises at least one strap (80) fastened to the float (15) in order to at least limit the freedom of movement of the float (15) relative to the actuator (30).

6. A buoyancy system according to Claim 5,
**characterised in that** at least one strap (80) extends between said cylinder (35) and an outer casing (16) of the float (15).

7. A buoyancy system according to any one of Claims 1 to 6,
**characterised in that** said deployment device (20) comprises at least one tarpaulin (85) fastened to a float (15) for at least limiting the ingress of water into a cabin (4) facing the float (15).

8. A buoyancy system according to any one of Claims 1 to 7,
**characterised in that** said rod (40) comprises an elongate portion (41) which slides in the cylinder (35) followed by a bent portion (42) passing through a float (15) which is hollow in its centre.

9. A buoyancy system according to any one of Claims 1 to 8,
**characterised in that** said deployment device (20) comprises an extension means for extending the actuator (30) in order to generate translation of the rod (40) relative to the cylinder (35) following the inflation of a float (15).

10. An aircraft (1) provided with a fuselage,
**characterised in that** said aircraft (1) comprises a buoyancy system (10) according to any one of Claims 1 to 9, said cylinder being fastened to the fuselage (2).
